# FASCICULE DE BREVET EUROPEEN

(11) **EP 0 972 608 B1**
(45) Date de publication et mention de la délivrance du brevet: **10.12.2003**
(21) Numéro de dépôt: 98810673.8
(22) Date de dépôt: 14.07.1998
(51) Int. Cl.: B23Q 1/60, B23Q 1/58, B23Q 1/56, F16H 25/18, B65G 47/90, B65G 47/91

(54) **Dispositif d'entraînement d'une plateforme en déplacement dans un plan**
Antriebseinrichtung für die Bewegung einer Plattform in einer Ebene
Drive apparatus for the planar displacement of a platform

(43) Date de publication de la demande: 19.01.2000
(73) Titulaire: Kummer Frères SA, Fabrique de machines, CH-2720 Tramelan (CH)
(72) Inventeur: Leiber, Hans-Jürgen, 2720 Tramelan (CH)
(74) Mandataire: WILLIAM BLANC & CIE

(56) Documents cités:
- DE-U- 9 300 510
- US-A- 3 645 001
- US-A- 4 972 574
- US-A- 5 339 749
- PATENT ABSTRACTS OF JAPAN vol. 11, no. 74 (M-568) [2521], 6 mars 1987 & JP 61 230829 A (TOSHIBA MACH CO LTD), 15 octobre 1986

## Description

La présente invention concerne un dispositif permettant d'entraîner une plateforme, apte à porter un objet quelconque, ou dans le cas des machines-outils, une broche porte-outil ou une broche porte-pièce, selon une direction quelconque d'un plan, ledit plan contenant les deux axes X et Z connus dans la technique des machines-outils.

Le déplacement d'une telle plateforme, qui peut représenter un élément physique ou dans le cas des machines-outils, être constituée directement de la broche porte-pièce ou porte-outil, est obtenu généralement par deux coulisses croisées superposées, disposées perpendiculairement entre elles, chacune d'entre elles étant commandée séparément selon l'une ou l'autre des directions de déplacement, ou étant commandées simultanément pour un déplacement selon une direction combinée intermédiaire.

Un inconvénient majeur de ce dispositif connu de coulisses croisées réside dans la superposition des deux coulisses, faisant que la broche porte-outil ou porte-pièce est relativement éloignée des coulisses de guidage de la coulisse inférieure sur le bâti de la machine ; on a donc un important moment de torsion de la broche relativement à ces coulisses de guidage. D'autre part, la superposition de deux coulisses entraîne un manque de rigidité de l'ensemble compris entre les coulisses de guidage mentionnées plus haut et la broche. De plus, la coulisse supérieure, ayant une certaine masse, est toujours entraînée lors du déplacement de la coulisse inférieure, même lorsque cette coulisse supérieure est inactive, ce qui limite les accélérations possibles pour un moteur d'entraînement de la coulisse inférieure, de puissance déterminée. Enfin, la disposition orthogonale des moyens d'entraînement des deux coulisses complique la conception et la construction de la machine.

JP-A-61.230.829 montre un dispositif comprenant deux chariots aptes à se déplacer selon une direction, l'un des deux chariots comportant un moyen de guidage oblique permettant, par un déplacement combiné des deux chariots, un déplacement d'une plateforme selon une direction quelconque. Dans ce dispositif, le deuxième chariot, ainsi que le moteur qui l'entraîne, est complètement porté par le premier chariot. On retrouve l'inconvénient mentionné précédemment selon lequel les accélérations possibles du premier chariot sont limitées. Par ailleurs, vu que le deuxième moteur est entraîné en déplacement par le premier moteur, sa commande en devient plus compliquée.

Un premier but de l'invention est de proposer un dispositif de déplacement d'une plateforme selon une direction quelconque d'un plan contenant deux axes orthogonaux, ne rencontrant pas les inconvénients des dispositifs connus.

Un deuxième but de l'invention est que le dispositif précédent soit de conception et de construction simple, qu'il soit compact et rigide.

Un autre but de l'invention est de proposer des moyens d'entraînement et de contrôle de position du dispositif adaptés à la géométrie particulière de ce dispositif.

Encore un autre but de l'invention est de proposer une broche porte-outil ou porte-pièce équipée du dispositif précédent.

Enfin un autre but de l'invention est de proposer une machine-outil, de type quelconque, équipée d'au moins une broche porte-outil et/ou d'au moins une broche porte-pièce équipée d'un dispositif précédent.

Pour ceci il est proposé un dispositif possédant les caractéristiques mentionnées dans la partie caractérisante de la revendication 1, des formes d'exécution particulières ou variantes étant décrites dans les revendications dépendantes. Les revendications 20 à 22 décrivent des broches ou une machine-outil comme recherchées.

La description qui suit décrit plusieurs formes d'exécution d'un tel dispositif, cette description étant à considérer en regard du dessin annexé comportant les figures où :
la figure 1 est une vue par-dessus d'une portion de machine équipée d'un dispositif selon une première forme d'exécution de l'invention, représenté de manière schématique,
la figure 2 est une vue en perspective du dispositif de la figure 1,
la figure 3 est une vue par-dessus d'une portion de machine équipée d'un dispositif selon une deuxième forme d'exécution de l'invention, représenté de manière schématique,
la figure 4 est une vue par-dessus d'une portion de machine équipée d'un dispositif selon une troisième forme d'exécution de l'invention, représenté de manière schématique,
la figure 5 montre schématiquement une première forme d'exécution des moyens d'entraînement des chariots, et
la figure 6 montre une deuxième forme d'exécution de ces moyens.

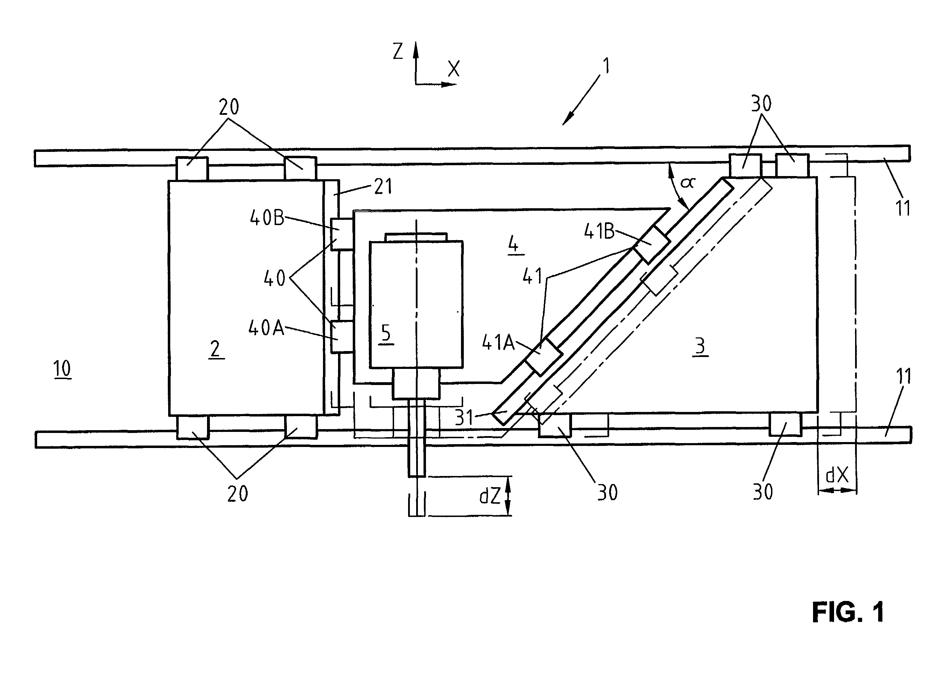

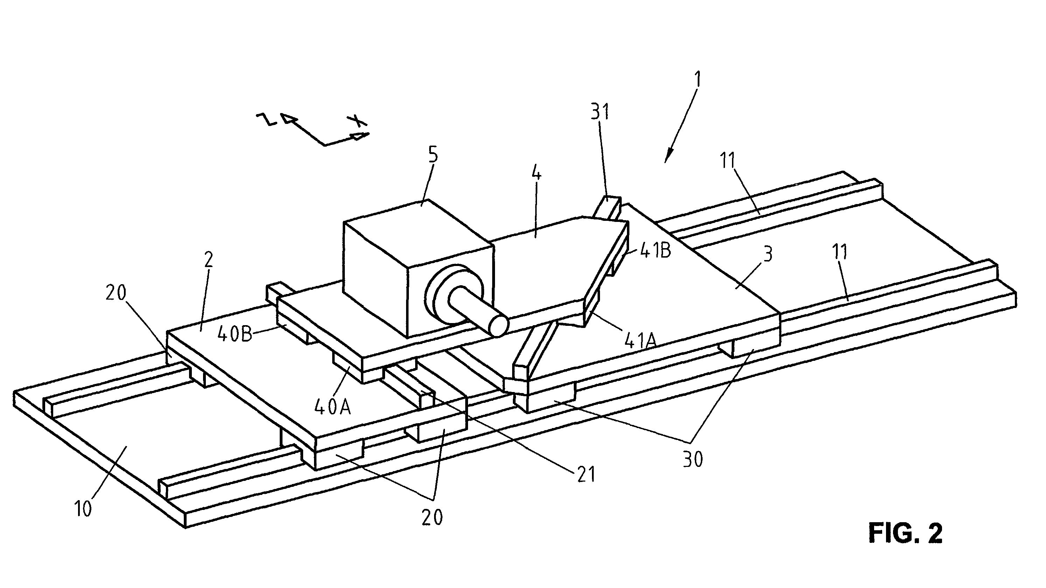

Aux figures 1 et 2, nous avons une portion de machine-outil 1, comprenant un bâti 10 sur lequel on a deux coulisses de guidage 11, disposées parallèlement entre elles selon l'axe X représenté sur le repère orthogonal. Le dispositif selon l'invention est constitué d'un premier chariot 2, d'un deuxième chariot 3 et d'une plateforme 4 partiellement superposée aux deux chariots 2 et 3, selon l'une ou l'autre des manières décrites plus bas. La plateforme 4 supporte une broche 5, ici une broche porte-outil, mais qui pourrait tout aussi bien être une broche porte-pièce ou n'importe quel objet.

Les deux chariots 2 et 3 sont aptes à se déplacer dans les deux sens selon la direction X, étant munis de coulisseaux 20, respectivement 30, sur les coulisses de guidage 11.

La plateforme 4 est munie, sur la portion de sa face inférieure superposée au premier chariot 2, d'un coulisseau 40 coopérant avec une coulisse 21 disposée sur la face supérieure du chariot 2. On voit sur la figure, que pour des raisons de stabilité de la plateforme 4, le coulisseau 40 est constitué en fait de deux coulisseaux successifs 40A et 40B disposés l'un après l'autre sur la même coulisse 21. De même, la portion de la face inférieure de la plateforme 4 superposée au deuxième chariot 3 est munie d'un coulisseau 41 coopérant avec une coulisse 31 disposée sur la face supérieure du chariot 3, le coulisseau 41 étant aussi constitué de deux coulisseaux 41A et 41B successifs disposés l'un après l'autre sur la même coulisse 31.

La coulisse 21 et les coulisseaux 40A et 40B sont alignés selon l'axe Z, soit perpendiculairement à l'axe X, alors que la coulisse 31 et les coulisseaux 41A et 41B sont alignés sur un axe faisant un angle α avec les coulisses de guidage 11, respectivement avec l'axe X.

Des dispositions décrites ci-dessus, on comprend qu'en imposant un même déplacement selon la direction de l'axe X, selon la même vitesse et le même sens, aux deux chariots 2 et 3, la plateforme 4 ainsi que la broche ou l'objet 5 se déplace, selon ce mouvement, selon la direction de l'axe X. Par ailleurs, en bloquant le chariot 2 sur les coulisses 11 et en imposant un déplacement selon la direction de l'axe X, dans un sens ou dans l'autre au chariot 3, on voit que la plateforme 4, respectivement la broche ou l'objet 5 se déplace selon la direction de l'axe Z, dans un sens ou dans l'autre, le mouvement selon l'axe X, dans un sens ou dans l'autre, imposé au chariot 3 étant transformé en un mouvement selon l'axe Z, dans un sens ou dans l'autre, de la plateforme 4, grâce aux coulisseaux 41A et 41 B coulissant sur la coulisse 31, selon l'angle α. Vu que de préférence l'angle α est de 45°, le déplacement dz de la plateforme 4 selon l'axe Z se fait à la même vitesse et est de même amplitude que le déplacement dx du chariot 3 selon l'axe X. De la géométrie du système et lorsque l'angle α est de 45°, on voit qu'en imposant un déplacement dx dans le sens du rapprochement des deux chariots, on obtient un déplacement dz = dx vers la portion de machine disposée sur le haut de la figure 1, alors qu'en imposant un déplacement dx dans le sens de l'éloignement des deux chariots, on obtient un déplacement dz = dx vers la portion de machine disposée sur le bas de la figure 1.

Ainsi, avec le dispositif selon cette première forme d'exécution de l'invention, on obtient un déplacement de la plateforme 4, respectivement de la broche 5 ou de l'objet qu'elle supporte, selon l'axe X en déplaçant simultanément, à même vitesse, selon la même direction et selon la même distance, les deux chariots 2 et 3, un déplacement selon l'axe Z en bloquant le premier chariot 2 et en déplaçant le deuxième chariot 3, ainsi qu'un déplacement selon une direction intermédiaire entre les axes X et Z par un déplacement combiné selon des vitesses ou sens différents des deux chariots 2 et 3.

Comme indiqué précédemment, l'angle α est de préférence de 45° afin d'obtenir un déplacement dz correspondant au déplacement dx. Pour certaines applications, il peut être par contre avantageux que, pour un déplacement dx donné du chariot 3 on ait un déplacement dz de la plateforme 4 différent de dx. Ce cas peut survenir notamment lorsqu'on désire une grande précision de positionnement de la plateforme 4 selon l'axe Z. Vu que de manière générale on a tg α = dz / dx, on a par exemple pour un angle α de 26.56° un déplacement dz = dx/2, soit un doublement de la précision de positionnement selon l'axe Z relativement au positionnement selon l'axe X. Au contraire, pour un déplacement plus rapide de la plateforme 4 selon l'axe Z, on choisira un angle α supérieur à 45°. La valeur de l'angle α peut être choisie selon les besoins.

La figure 2 qui est une vue schématique en perspective du dispositif selon cette première forme d'exécution montre bien la position côte à côte des deux chariots 2 et 3 sur les coulisses de guidage 11 ainsi que la plateforme 4 partiellement superposée à ces deux chariots.

Cette première forme d'exécution a été décrite avec le chariot 2 portant la coulisse perpendiculaire à l'axe X disposé à gauche, mais il est évident que la construction symétrique est aussi possible.

Les moyens permettant d'actionner les deux chariots et de contrôler leurs déplacements seront décrits ultérieurement.

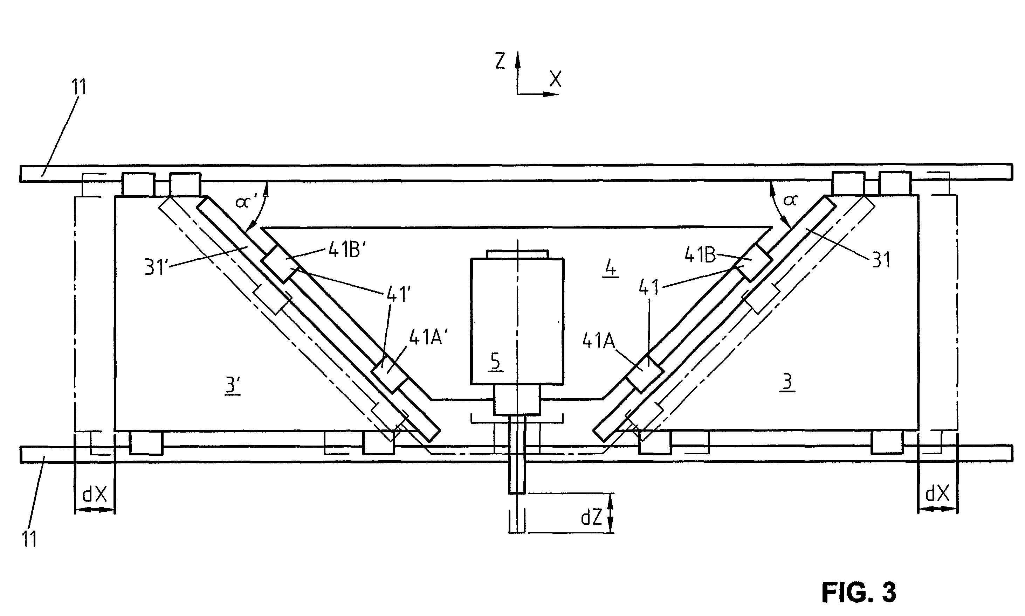

A la figure 3, on voit un dispositif semblable au précédent, si ce n'est qu'un chariot 3' est monté à la place du chariot 2 de la première forme d'exécution. Le chariot 3' est construit et est installé de manière symétrique au chariot 3, relativement à l'axe Z et comprend notamment une coulisse 31' alignée selon un angle α', valant aussi de préférence 45°. La plateforme 4 diffère de celle de la première forme d'exécution dans la mesure où elle est essentiellement symétrique relativement à l'axe Z, comprenant deux coulisseaux 41A' et 41 B' en regard de la coulisse 31'.

Pour un déplacement selon l'axe X, de la broche 5, la commande se fait comme précédemment en commandant simultanément les deux moyens d'entraînement des deux chariots, alors que le déplacement selon l'axe Z est commandé par un rapprochement ou un écartement relatif des deux chariots 3 et 3', les deux chariots étant actionnés selon la même vitesse et la même valeur de déplacement dx. Comme précédemment, si les angles α et α' sont de 45°, un rapprochement des deux chariots, faisant que chaque chariot parcourt un chemin dx, entraîne un déplacement de la broche 5 vers la portion de la machine située sur le haut du dessin d'une valeur dz = dx, alors qu'un écartement des deux chariots, faisant que chaque chariot parcourt un chemin dx, entraîne un déplacement de la broche 5 vers la portion de la machine située sur le bas du dessin d'une valeur dz = dx. Les mêmes considérations que précédemment peuvent être faites concernant la valeur des angles α et α'.

Relativement à la première forme d'exécution décrite, la deuxième forme d'exécution permet une répartition des forces entre la plateforme 4 et les coulisses 11 qui est plus symétrique, alors que l'encombrement du dispositif est plus grand, vu que le chariot 3' est plus long, selon la direction X, que le chariot 2.

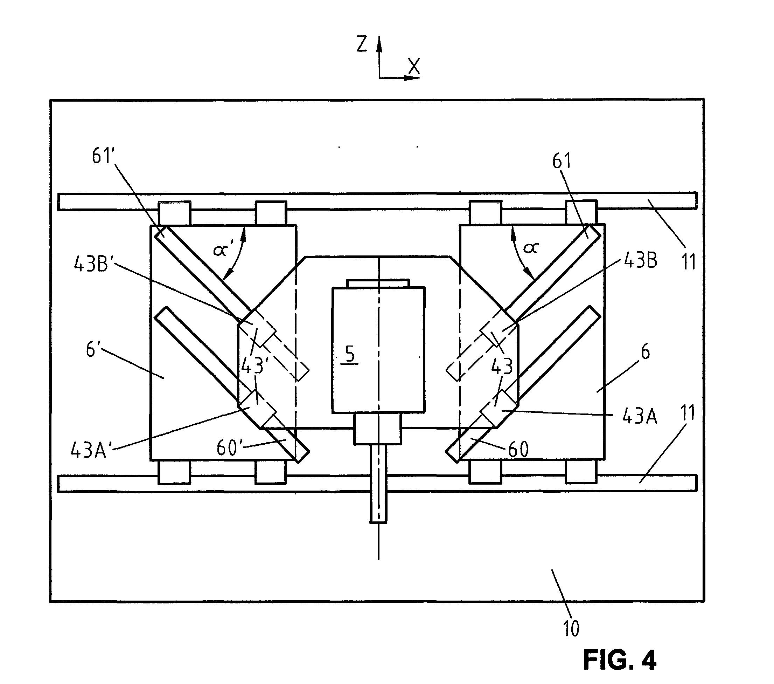

Une troisième forme d'exécution du dispositif, visible à la figure 4, permet de diminuer de manière drastique l'encombrement des chariots 3 et 3' sur la machine.

Dans cette troisième forme d'exécution, les deux chariots 6 et 6', qui sont symétriques relativement à l'axe Z l'un par rapport à l'autre, comprennent chacun deux coulisses 60 et 61, respectivement 60' et 61', disposées côte à côte et parallèlement entre elles, les deux coulisses d'un chariot étant inclinées d'un angle α ou α' relativement à l'axe X. De préférence et comme précédemment on a α = α' = 45°. De manière correspondante, la plateforme 4 est munie de coulisseaux 43A et 43B en regard et coopérant avec les coulisses 60 et 61, ainsi que de coulisseaux 43A' et 43B' coopérant avec les coulisses 60' et 61'. En comparant la figure 4 avec la figure 3, on voit aisément que remplacer les coulisseaux 41A et 41 B, respectivement 41 A' et 41 B' alignés respectivement sur les coulisses 31 et 31' par deux coulisseaux 43A et 43B, respectivement 43A' et 43B', disposés côte à côte sur deux coulisses 60 et 61, respectivement 60'et 61', parallèles, permet de diminuer notablement l'encombrement selon la direction X des chariots 6 et 6' ainsi que de la plateforme 4. Cette forme d'exécution donne un dispositif plus rigide que le précédent, plus compact avec encore une meilleure répartition des efforts entre la broche 5 et les coulisses de guidage 11. Les mêmes considérations que précédemment sur les valeurs des angles α et α' sont aussi valables.

En variante de cette troisième forme d'exécution, il est aussi possible que chaque chariot porte plus de deux coulisses parallèles, la plateforme étant munie des coulisseaux correspondants.

Une quatrième forme d'exécution d'un dispositif selon l'invention est encore envisageable, ledit dispositif comprenant un premier chariot identique au chariot 2 de la première forme d'exécution ainsi qu'un deuxième chariot identique au chariot 6 de la figure 4 de la troisième forme d'exécution.

On constate donc que pour entraîner la plateforme 4 ou la broche 5 selon l'un ou l'autre des axes X et Z ou selon un axe intermédiaire, il suffit d'entraîner indépendamment ou simultanément les deux chariots sur les glissières de guidage 11, c'est-à-dire selon un seul axe X, ceci pour n'importe quelle forme d'exécution décrite précédemment du dispositif. Cette disposition permet avantageusement de simplifier les dispositifs d'entraînement puisque les deux entraînements se font sur le même axe.

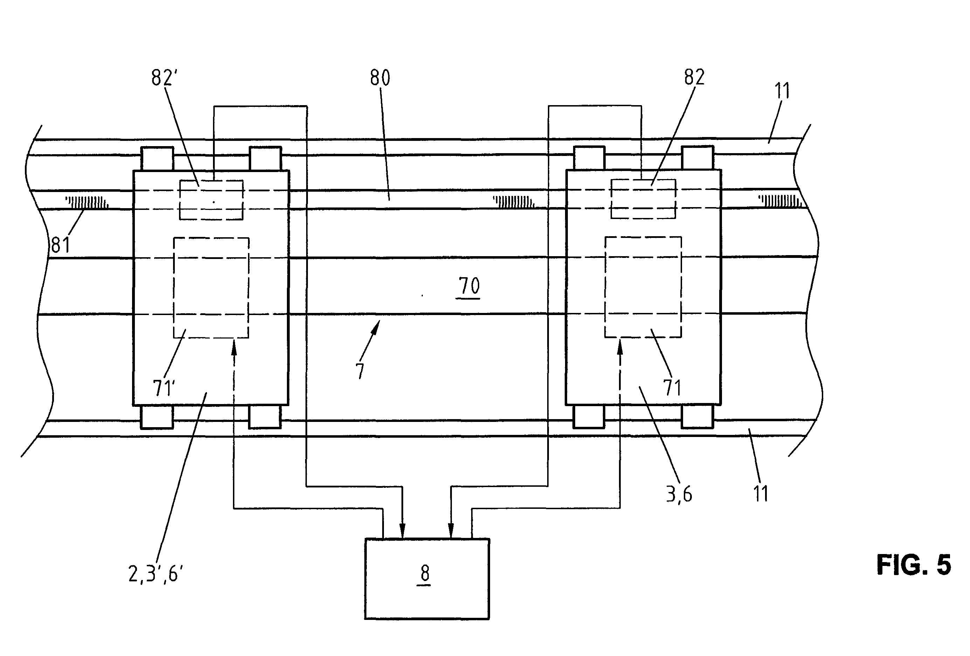

Selon une première forme d'exécution des moyens d'entraînement des deux chariots représentée à la figure 5 (les coulisses, la plateforme ainsi que l'objet qu'elle porte ne sont pas représentés sur cette figure ainsi que sur la suivante), on dispose un moteur linéaire 7 comprenant un induit plat 70 constituant le secondaire du moteur, disposé parallèlement aux deux glissières de guidage 11, c'est-à-dire selon l'axe X. Chaque chariot comprend un inducteur plat 71,71' constituant chacun un primaire du moteur, disposé sous le chariot et en regard de l'induit 70, de manière à ne laisser subsister qu'un faible espace entre l'induit 70 et les inducteurs 71 et 71'. Une unité de commande 8 est apte à commander séparément ou simultanément, dans un sens ou dans l'autre, chaque inducteur 71, 71', de manière à actionner, séparément ou simultanément, dans un sens ou dans l'autre, chaque chariot, imposant ainsi les déplacements selon les axes X et Z ou selon un axe intermédiaire mentionnés précédemment à la plateforme ainsi qu'à la broche porte-pièce ou porte-outil.

Pour la commande des déplacements de la broche 5, il est nécessaire de connaître exactement la position de chaque chariot sur les coulisses de guidage 11. Un dispositif de mesure des positions des chariots selon l'axe X est donc nécessaire. Un système de mesure optique est particulièrement bien adapté à ce problème. Le système comprend une règle 80, disposée selon l'axe X, portant une pluralité de repères 81 placés les uns à côté des autres. Chaque chariot comprend un capteur optique 82, 82', disposé sous le chariot en regard de la règle 80, un faible espace subsistant entre la règle et les capteurs. Chaque capteur peut donc envoyer un signal à l'unité de commande 8, indiquant la position exacte de chaque chariot le long des coulisses de guidage 11. D'autres moyens de mesure de position, capacitifs, inductifs ou autres sont aussi envisageables.

A partir des signaux donnés par les capteurs 82 et 82', permettant de connaître la position de chaque chariot sur les coulisses de guidage 11, l'unité de commande 8 est apte à calculer les coordonnées X₀ , Z₀ auxquelles se trouve la broche 5, ou plus précisément la pièce ou l'outil qu'elle porte, et connaissant les coordonnées X₁, Y₁ vers lesquelles la broche doit être amenée, l'unité de commande 8 est ensuite apte à calculer et commander les déplacements nécessaires des chariots, tenant compte de la valeur de l'angle α, et de l'angle α' selon la forme d'exécution.

Bien que la connaissance des positions des chariots selon l'axe X permette de déterminer exactement la position de la plateforme selon l'axe Z, il peut être avantageux, à titre de contrôle, de munir la plateforme ainsi que l'un ou l'autre des chariots d'un moyen de contrôle de position de la plateforme selon l'axe Z. Ce moyen, non représenté sur les figures, est avantageusement constitué d'une règle semblable à la règle 80, disposée parallèlement à l'axe Z sur l'un des chariots, ainsi que d'un capteur, semblable à l'un des capteurs 82 ou 82', disposé sur la plateforme.

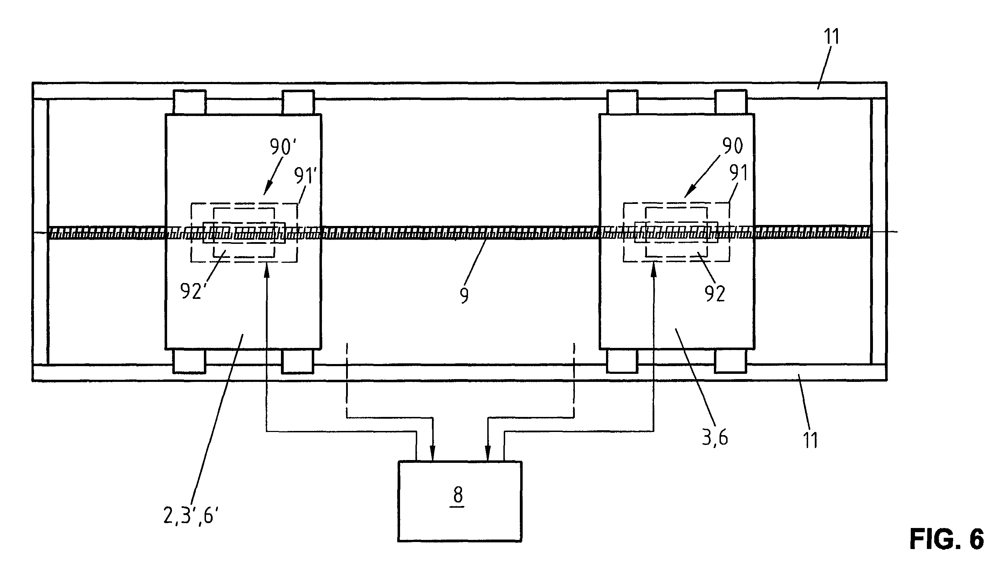

Une deuxième variante des moyens d'entraînement des deux chariots est visible sur la figure 6. Dans ce cas on a une vis mère 9, fixée parallèlement aux coulisses de guidage 11, la vis 9 ne pouvant être mise en rotation. Chaque chariot comporte un moteur ou servomoteur électrique 90, 90', composé d'un stator 91, 91' fixé audit chariot ainsi que d'un rotor 92, 92', percé d'un trou longitudinal, ledit trou comportant un filetage intérieur correspondant au filetage de la vis 9. La mise en rotation d'un rotor entraîne donc un déplacement du chariot correspondant, le rotor se vissant ou se dévissant sur la vis 9 selon le sens dans lequel il est commandé par l'unité de commande 8. Afin d'améliorer la précision de déplacement des chariots, et selon les applications, les moteurs ou servomoteurs peuvent être de type pas-à-pas.

Aucun dispositif de mesure de position des chariots n'est représenté sur la figure 6, mais il est bien entendu qu'un dispositif comme décrit précédemment peut aussi y être installé.

Les différentes formes d'exécution d'un dispositif d'entraînement de la plateforme 4 ont été décrites et représentées uniquement sous leur aspect cinématique, sans entrer dans des détails de construction, directement accessibles à l'homme du métier. Les moyens connus et usuels de lubrification des coulisses et coulisseaux ainsi que les moyens usuels et connus de rattrapage de jeu peuvent être appliqués sur ce dispositif. Le dispositif a été décrit muni de coulisses et coulisseaux ; il est bien entendu que l'un ou l'autre ou plusieurs de ces coulisses et coulisseaux peuvent être remplacés par des moyens de coulissement connus autres que ceux décrits, par exemple douille coulissante sur un tube, moyens de roulement dans un rail, glissières à billes, etc., de même que par des moyens de coulissement sans contact, par exemple hydrostatiques, pneumatiques, électromagnétiques, etc.

De même seulement deux variantes ont été décrites des moyens d'entraînement des chariots; par ces deux variantes il a surtout été illustré le fait que l'alignement des moyens d'entraînement selon un seul axe permet des simplifications de construction non négligeables. D'autres moyens d'entraînement des chariots peuvent aussi être envisagées selon les applications souhaitées, par exemple des entraînements mécaniques, électriques, pneumatiques ou hydrauliques.

Par la présence des deux chariots commandant les déplacements de la plateforme côte à côte sur les coulisses de guidage, c'est-à-dire sur un seul plan, on limite fortement la différence de hauteur entre l'outil ou la pièce et les coulisses de guidage 11, ce qui améliore la compacité et la rigidité de l'ensemble. Vu que d'autre part il n'y a jamais un chariot inactif entraîné par l'autre chariot, la masse entraînée est plus faible et en conséquence les accélérations possibles pour déplacer l'outil ou la pièce sont plus élevées pour une puissance déterminée des moteurs.

## Revendications

1. Dispositif de déplacement d'une plateforme (4) selon une direction quelconque d'un plan contenant deux axes orthogonaux (X,Z),
comprenant :
un premier chariot (2 ;3' ;6') apte à être entraîné selon le premier (X) des deux dits axes orthogonaux,
un deuxième chariot (3 ;6) apte à être entraîné selon le même premier des deux dits axes orthogonaux,
la plateforme comportant un premier moyen de coulissement (21/40 ; 31'/41'; 60',61'/43') relativement audit premier chariot ainsi qu'un deuxième moyen de coulissement ( 31/41 ; 60,61/43) relativement audit deuxième chariot,
au moins un desdits moyens de coulissement étant orienté selon un troisième axe faisant un angle (α,α') différent de 90°; relativement audit premier desdits axes orthogonaux, ledit troisième axe étant situé dans le même plan que les deux axes orthogonaux,
**caractérisé en ce que**
les deux chariots (2,3',6',3,6) sont guidés dans un même plan par un moyen de guidage commun (11 ) disposé selon le premier (X) des deux dits axes orthogonaux.

2. Dispositif selon la revendication 1, **caractérisé en ce que** le moyen de coulissement orienté selon ledit troisième axe (α,α') de la plateforme sur au moins un desdits chariots (3,6,6') est constitué d'au moins une coulisse (31,60,61) disposée parallèlement audit troisième axe sur ledit au moins un desdits chariots (3,6,6'), et d'au moins un coulisseau (41A,41B, 43,43') fixé sur ladite plateforme et coopérant avec ladite au moins une coulisse (31,60,61).

3. Dispositif selon l'une des revendications précédentes, **caractérisé en ce que** l'un desdits moyens de coulissement (21/40) de la plateforme sur un desdits chariots (2) est constitué d'un moyen de coulissement orienté selon le deuxième axe orthogonal (Z).

4. Dispositif selon l'une des revendications précédentes, **caractérisé en ce que** le déplacement de la plateforme (4) selon le premier (X) des deux axes orthogonaux est obtenu par un déplacement identique et simultané des deux chariots (2,3,3',6, 6') selon ledit premier des deux axes orthogonaux.

5. Dispositif selon l'une des revendications précédentes, **caractérisé en ce qu'**un déplacement de la plateforme (4) selon un axe différent dudit premier (X) des deux axes orthogonaux, mais situé dans le même plan que ces deux axes, est obtenu par un déplacement différentiel des deux chariots (2,3,3',6, 6') selon ledit premier des deux axes orthogonaux.

6. Dispositif selon la revendication 5, **caractérisé en ce que** ledit axe différent dudit premier (X) axe correspond au second (Z) des deux axes orthogonaux.

7. Dispositif selon la revendication 6, **caractérisé en ce que** le déplacement de la plateforme (4) selon le deuxième (Z) desdits deux axes orthogonaux est obtenu par un blocage le long dudit premier axe (X) du chariot (2) muni d'un moyen de coulissement (21/40) orienté selon le deuxième axe orthogonal (Z), ainsi que par un déplacement selon ledit premier axe (X) du chariot (3,3',6,6') dont les moyens de coulissement de la plateforme sur ledit chariot sont orientés selon ledit troisième axe (α,α').

8. Dispositif selon l'une des revendications précédentes, **caractérisé en ce que** la valeur (dz) du déplacement de la plateforme (4) selon le deuxième axe (Z) est égal à la valeur (dx) du déplacement de l'un ou des deux chariots (3,6,6') selon le premier axe (X) multiplié par la tangente de l'angle (α,α').

9. Dispositif selon l'une des revendications précédentes, **caractérisé en ce que** l'angle (α,α') différent de 90° vaut 45°.

10. Dispositif selon la revendication 9, **caractérisé en ce que** la valeur du déplacement (dz) de la plateforme (4) est identique à la valeur du déplacement (dx) du ou des chariots (3,3',6,6') à déplacer.

11. Dispositif selon l'une des revendications précédentes, **caractérisé en ce que** l'entraînement de chaque chariot (2,3,3',6,6') est obtenu par des moyens motorisés (7 ;9) agissant selon un seul axe (X).

12. Dispositif selon la revendication 11, **caractérisé en ce que** l'entraînement des deux chariots (2,3',6',3,6) selon le premier des deux dits axes (X) est obtenu par deux moyens motorisés (71,71' ; 90,90') agissant chacun sur un chariot, les deux moyens motorisés étant commandés indépendamment ou simultanément.

13. Dispositif selon la revendication 12 **caractérisé en ce que** les deux moyens motorisés sont constitués d'un double moteur linéaire, comprenant un induit plat (70), disposé parallèlement audit premier (X) des deux dits axes et deux inducteurs plats (71, 71'), disposés chacun sous un desdits chariots, en regard de l'induit.

14. Dispositif selon la revendication 12, **caractérisé en ce que** les deux moyens motorisés sont constitués de deux moteurs électriques (90,90'), le stator (91,91') de chacun d'eux étant fixé à un chariot, les deux rotors (92,92') étant chacun munis d'un percement longitudinal muni d'un filetage intérieur, les deux rotors étant alignés et engagés par leur filetage intérieur sur un arbre (9) muni d'un filetage extérieur, ledit arbre étant fixe et étant aligné parallèlement audit premier axe (X).

15. Dispositif selon la revendication 14, **caractérisé en ce que** les deux moteurs (90,90') sont des moteurs pas-à-pas.

16. Dispositif selon l'une des revendications précédentes, **caractérisé en ce qu'**il comprend des moyens de mesure (80,82,82') aptes à détecter la position de chaque chariot le long du premier axe (X).

17. Dispositif selon la revendication 16, **caractérisé en ce qu'**il comprend en outre des moyens de mesure aptes à détecter la position de la plateforme le long du deuxième axe (Z).

18. Dispositif selon l'une des revendications 11 à 17, **caractérisé en ce qu'**il est associé à une unité de commande (8) apte à recevoir des signaux de capteurs (82, 82') indiquant la position de chaque chariot le long dudit premier axe (X) et à actionner, séparément ou simultanément, chaque moyen motorisé (71,71'; 90,90') d'entraînement des chariots.

19. Dispositif selon la revendication 18, **caractérisé en ce que** l'unité de commande (8) comprend un programme apte à calculer le déplacement nécessaire de la plateforme pour atteindre un point déterminé du plan contenant les deux axes orthogonaux (X,Z), à partir d'un point de départ quelconque dudit plan, ledit programme tenant compte de la valeur de l'angle (α,α').

20. Broche porte-outil (5), montée sur une plateforme (4) ou constituant ladite plateforme d'un dispositif selon l'une des revendications précédentes.

21. Broche porte-pièce, montée sur une plateforme (4) ou constituant ladite plateforme d'un dispositif selon l'une des revendications 1 à 19

22. Machine-outil équipée d'au moins une broche porte-outil selon la revendication 20 et/ou d'une broche porte-pièce selon la revendication 21.

## Claims

1. A device for moving a platform (4) in any direction in a plane containing two orthogonal axes (X, Z),
comprising:
a first carriage (2; 3'; 6') able to be driven along the first (X) of the said two orthogonal axes,
a second carriage (3; 6) able to driven along the same first of the said two orthogonal axes,
the platform comprising a first means (21/40; 31'/41'; 60', 61'/43') of sliding relative to the said first carriage and a second means (31/41; 60, 61/43) of sliding relative to the said second carriage,
at least one of the said sliding means being oriented along a third axis forming an angle (α, α') different from 90°, relative to the said first of the said orthogonal axes, the said third axis being situated in the same plane as the two orthogonal axes;
**characterised in that**
the two carriages (2, 3', 6', 3, 6) are guided in the same plane by a common guidance means (11) disposed along the first (X) of the said two orthogonal axes.

2. A device according to Claim 1, **characterised in that** the sliding means oriented according to the said third axis (α, α') of the platform on at least one of the said carriages (3, 6, 6') consists of at least one slide (31, 60, 61) disposed parallel to the said third axis on the said at least one of the said carriages (3, 6, 6'), and at least one slider (41A, 41B, 43, 43') fixed to the said platform and cooperating with a said at least one slide (31, 60, 61).

3. A device according to one of the preceding claims, **characterised in that** one of the said means (21/40) of sliding the platform on one of the said carriages (2) consists of a sliding means oriented along the second orthogonal axis (Z).

4. A device according to one of the preceding claims, **characterised in that** the movement of the platform (4) along the first (X) of the two orthogonal axes is obtained by an identical and simultaneous movement of the two carriages (2, 3, 3', 6, 6') along the said first of the two orthogonal axes.

5. A device according to one of the preceding claims, **characterised in that** a movement of the platform (4) along an axis different from the said first (X) of the two orthogonal axes, but situated in the same plane as these two axes, is obtained by a differential movement of the two carriages (2, 3, 3', 6, 6') along the said first of the two orthogonal axes.

6. A device according to Claim 5, **characterised in that** the said axis different from the said first (X) axis corresponds to the second (Z) of the two orthogonal axes.

7. A device according to Claim 6, **characterised in that** the movement of the platform (4) along the second (Z) of the said two orthogonal axes is obtained by a locking along the said first axis (X) of the carriage (2) provided with a sliding means (21/40) oriented along the second orthogonal axis (Z), and by a movement along the said first axis (X) of the carriage (3, 3', 6, 6') whose means of sliding the platform on the said carriage are oriented along the said third axis (α, α').

8. A device according to one of the preceding claims, **characterised in that** the value (dz) of the movement of the platform (4) along the second axis (Z) is equal to the value (dx) of the movement of one or both carriages (3, 6, 6') along the first axis (X) multiplied by the tangent of the angle (α, α').

9. A device according to one of the preceding claims, **characterised in that** the angle (α, α') different from 90° is equal to 45°.

10. A device according to Claim 9, **characterised in that** the value of the movement (dz) of the platform (4) is identical to the value of the movement (dx) of the carriage or carriages (3, 3', 6, 6') to be moved.

11. A device according to one of the preceding claims, **characterised in that** the driving of each carriage (2, 3, 3', 6, 6') is obtained by motorised means (7; 9) acting along a single axis (X).

12. A device according to Claim 11, **characterised in that** the driving of the two carriages (2, 3', 6', 3, 6) along the first of the said two axes (X) is obtained by two motorised means (71, 71'; 90, 90') each acting on a carriage, the two motorised means being controlled independently or simultaneously.

13. A device according to Claim 12, **characterised in that** the two motorised means consist of a double linear motor, comprising a flat armature (70) disposed parallel to the said first (X) of the said two axes and two flat field windings (71, 71'), each disposed under one of the said carriages, opposite the armature.

14. A device according to Claim 12, **characterised in that** the two motorised means consist of two electric motors (90, 90'), the stator (91, 91') of each of them being fixed to a carriage, the two rotors (92, 92') each being provided with a longitudinal hole provided with an internal thread, the two rotors being aligned and engaged by their internal thread on a shaft (9) provided with an external thread, the said shaft being fixed and aligned parallel to the said first axis (X).

15. A device according to Claim 14, **characterised in that** the two motors (90, 90') are stepping motors.

16. A device according to one of the preceding claims, **characterised in that** it comprises measuring means (80, 82, 82') able to detect the position of each carriage along the first axis (X).

17. A device according to Claim 16, **characterised in that** it also comprises measuring means able to detect the position of the platform along the second axis (Z).

18. A device according to one of Claims 11 to 17, **characterised in that** it is associated with a control unit (8) able to receive signals from sensors (82, 82') indicating the position of each carriage along the said first axis (X) and to actuate, separately or simultaneously, each motorised means (71, 71'; 90, 90') of driving the carriages.

19. A device according to Claim 18, **characterised in that** the control unit (8) comprises a program able to calculate the movement of the platform necessary for reaching a given point on the plane containing the two orthogonal axes (X, Z), from any starting point on the said plane, the said program taking account of the value of the angle (α, α').

20. A tool-holder spindle (5), mounted on a platform (4) or constituting the said platform of a device according to one of the preceding claims.

21. A work-holder spindle mounted on a platform (4) or constituting the said platform of a device according to one of Claims 1 to 19.

22. A machine tool equipped with at least one tool-holder spindle according to Claim 20 and/or a work-holder spindle according to Claim 21.

## Patentansprüche

1. Verschiebungsvorrichtung eines Trägers (4) nach einer beliebigen Richtung einer zwei orthogonale Achsen (X, Z) enthaltenden Ebene, mit:
einem ersten Schlitten (2; 3'; 6'), der nach der ersten (X) der beiden besagten orthogonalen Achsen angetrieben werden kann,
einem zweiten Schlitten (3; 6), der nach der gleichen ersten der beiden besagten orthogonalen Achsen angetrieben werden kann,
wobei der Träger ein erstes Gleitmittel (21/40; 31'/41'; 60', 61'/43') in Bezug auf den besagten ersten Schlitten sowie ein zweites Gleitmittel (31/41; 60, 61/43) in Bezug auf den besagten zweiten Schlitten aufweist,
wobei mindestens eines der besagten Gleitmittel nach einer dritten Achse mit einem von 90° abweichenden Winkel (α, α') in Bezug auf die besagte erste der besagten orthogonalen Achsen ausgerichtet ist, wobei sich die besagte dritte Achse in der gleichen Ebene befindet wie die beiden orthogonalen Achsen,
**dadurch gekennzeichnet, dass**
die beiden Schlitten (2, 3', 6', 3, 6) von einem gemeinsamen, nach der ersten (X) der beiden besagten orthogonalen Achsen angeordneten Führungsmittel (11) in einer gleichen Ebene geführt werden.

2. Vorrichtung nach Anspruch 1, **dadurch gekennzeichnet, dass** das nach der besagten dritten Achse (α, α') des Trägers ausgerichtete Führungsmittel auf mindestens einem der besagten Schlitten (3, 6, 6') aus mindestens einer Kulisse (31, 60, 61) besteht, die parallel zur besagten dritten Achse auf dem besagten mindestens einem der besagten Schlitten (3, 6, 6') angeordnet ist, und aus mindestens einem Gleitstück (41A, 41B, 43, 43'), das an dem besagten Träger befestigt ist und mit der besagten mindestens einen Kulisse (31, 60, 61) zusammenwirkt.

3. Vorrichtung nach einem der vorherigen Ansprüche, **dadurch gekennzeichnet, dass** eines der besagten Gleitmittel (21/40) des Trägers auf einem der besagten Schlitten (2) aus einem nach der zweiten orthogonalen Achse (Z) ausgerichteten Gleitmittel besteht.

4. Vorrichtung nach einem der vorherigen Ansprüche, **dadurch gekennzeichnet, dass** die Verschiebung des Trägers (4) nach der ersten (X) der beiden orthogonalen Achsen durch eine identische und gleichzeitige Verschiebung der beiden Schlitten (2, 3, 3', 6, 6') nach der besagten ersten der beiden orthogonalen Achsen bewirkt wird.

5. Vorrichtung nach einem der vorherigen Ansprüche, **dadurch gekennzeichnet, dass** eine Verschiebung des Trägers (4) nach einer anderen Achse als der besagten ersten (X) der beiden orthogonalen Achsen, die sich jedoch in der gleichen Ebene befindet wie diese beiden Achsen, durch eine Differentialverschiebung der beiden Schlitten (2, 3, 3', 6, 6') nach der besagten ersten der beiden orthogonalen Achsen bewirkt wird.

6. Vorrichtung nach Anspruch 5, **dadurch gekennzeichnet, dass** die besagte, sich von der besagten ersten (X) Achse unterscheidenden Achse der zweiten (Z) der beiden orthogonalen Achsen entspricht.

7. Vorrichtung nach Anspruch 6, **dadurch gekennzeichnet, dass** die Verschiebung des Trägers (4) nach der zweiten (Z) der besagten beiden orthogonalen Achsen bewirkt wird durch ein Blockieren des mit einem nach der zweiten orthogonalen Achse (Z) ausgerichteten Gleitmittel (21/40) ausgestatteten Schlittens entlang der besagten ersten Achse (X), sowie durch eine Verschiebung des Schlittens (3, 3', 6, 6') nach der besagten ersten Achse (X), wobei die Gleitmittel des Trägers auf dem besagten Schlitten nach der besagten dritten Achse (α, α') ausgerichtet sind.

8. Vorrichtung nach einem der vorherigen Ansprüche, **dadurch gekennzeichnet, dass** der Wert (dz) der Verschiebung des Trägers (4) nach der zweiten Achse (Z) gleich dem Wert (dx) der Verschiebung eines der beiden Schlitten (3, 6, 6') nach der ersten Achse (X) multipliziert mit der Tangente des Winkels (α, α') ist.

9. Vorrichtung nach einem der vorherigen Ansprüche, **dadurch gekennzeichnet, dass** der von 90° abweichende Winkel (α, α') 45° beträgt.

10. Vorrichtung nach Anspruch 9, **dadurch gekennzeichnet, dass** der Wert der Verschiebung (dz) des Trägers (4) identisch ist mit dem Wert der Verschiebung (dx) des oder der zu verschiebenden Schlitten (3, 3', 6, 6').

11. Vorrichtung nach einem der vorherigen Ansprüche, **dadurch gekennzeichnet, dass** der Antrieb eines jeden Schlittens (2, 3, 3', 6, 6') durch nach einer Achse (X) wirkende motorisierte Mittel (7; 9) erfolgt.

12. Vorrichtung nach Anspruch 11, **dadurch gekennzeichnet, dass** der Antrieb der beiden Schlitten (2, 3, 6', 3, 6) nach der ersten der beiden besagten Achsen (X) durch motorisierte Mittel (71, 71'; 90, 90') erfolgt, die jeweils auf einen Schlitten wirken, wobei die beiden motorisierten Mittel unabhängig voneinander oder gleichzeitig gesteuert werden.

13. Vorrichtung nach Anspruch 12, **dadurch gekennzeichnet, dass** die beiden motorisierten Mittel aus einem doppelten linearen Motor bestehen, der einen Flachanker (70) aufweist, der parallel zur besagten ersten (X) der beiden besagten Achsen angeordnet ist, und zwei flache Induktoren (71, 71'), die jeweils unter einem der besagten Schlitten gegenüber dem Anker angeordnet sind.

14. Vorrichtung nach Anspruch 12, **dadurch gekennzeichnet, dass** die beiden motorisierten Mittel aus zwei Elektromotoren (90, 90') bestehen, wobei der Stator (91, 91) eines jeden Motors an einem Schlitten befestigt ist, wobei die beiden Rotoren (92, 92') jeweils eine Längsbohrung mit einem Innengewinde aufweisen, wobei die beiden Rotoren über ihr Innengewinde auf einer ein Außengewinde umfassenden Welle (9) ausgerichtet und verschraubt sind, wobei die besagte Welle ortsfest und parallel zur besagten ersten Achse (X) ausgerichtet ist.

15. Vorrichtung nach Anspruch 14, **dadurch gekennzeichnet, dass** die beiden Motoren (90, 90') Schrittmotoren sind.

16. Vorrichtung nach einem der vorherigen Ansprüche, **dadurch gekennzeichnet, dass** sie Messmittel (80, 82, 82') aufweist, die die Position eines jeden Schlittens entlang der ersten Achse (X) erfassen können.

17. Vorrichtung nach Anspruch 16, **dadurch gekennzeichnet, dass** sie ferner Messmittel umfasst, die die Position des Trägers entlang der zweiten Achse (Z) erfassen können.

18. Vorrichtung nach einem der Ansprüche 11 bis 17, **dadurch gekennzeichnet, dass** sie einer Steuereinheit (8) zugeordnet ist, die Signale von Sensoren (82, 82') empfangen kann, die die Position eines jeden Schlittens entlang der besagten ersten Achse (X) anzeigen, und die getrennt oder gleichzeitig jedes motorisierte Antriebsmittel (71, 71'; 90, 90') betätigen kann.

19. Vorrichtung nach Anspruch 18, **dadurch gekennzeichnet, dass** die Steuereinheit (8) ein Programm umfasst, das die erforderliche Verschiebung des Trägers errechnen kann, um einen bestimmten Punkt der die beiden orthogonalen Achsen (X, Z) enthaltenden Ebene ab einen beliebigen Ausgangspunkt der besagten Ebene zu erreichen, wobei das besagte Programm den Wert des Winkels (α, α') berücksichtigt.

20. Werkzeughalterspindel (5), montiert auf einem Träger (4) oder den besagten Träger bildend, einer Vorrichtung nach einem der vorherigen Ansprüche.

21. Werkstückspindel, montiert auf einem Träger (4) oder den besagten Träger bildend, einer Vorrichtung nach einem der Ansprüche 1 bis 19.

22. Werkzeugmaschine, ausgestattet mit mindestens einer Werkzeughalterspindel nach Anspruch 20 und/oder einer Werkstückspindel nach Anspruch 21.
